# EUROPÄISCHE PATENTANMELDUNG

(11) **EP 2 116 747 A2**
(43) Veröffentlichungstag der Anmeldung: **11.11.2009**
(21) Anmeldenummer: 09155820.5
(22) Anmeldetag: 23.03.2009
(51) Int. Cl.: F16H 63/34, F16H 61/18

(54) **Schalteinrichtung für ein Fahrzeuggetriebe**

(30) Priorität: 09.05.2008 DE 102008001681
(71) Anmelder: ZF Friedrichshafen AG, 88038 Friedrichshafen (DE)
(72) Erfinder: Birk, Reinhard, 88142 Wasserburg (DE); Ehrlinger, Friedrich J., 88048 Friedrichshafen (DE)

(57) **Zusammenfassung**

Die Erfindung betrifft eine Schalteinrichtung mit einer elektronischen Steuereinheit (7) und Sensorik (8, 9, 10) zur Erfassung von Getriebeparametern, für ein Fahrzeuggetriebe, welches einen durch den Fahrzeugführer manuell schaltbaren Teil (1) aufweist, bei welchem über eine Schaltwelle (2) gezielt einzelne, anwählbare Schaltschienen (11a, 11b) bewegbar und darüber zugeordnete Übersetzungsverhältnisse schaltbar sind, wobei im Bereich der Schaltwelle (2) mindestens ein Sperrzylinder (4a) angeordnet ist, welcher über die elektronische Steuereinheit (7) in Abhängigkeit der erfassten Getriebeparameter regelbar ist und im betätigten Zustand mit einer Sperrrastierung (6a) in Kontakt tritt, was eine Verdrehung der Schaltwelle (2) in die der Sperrrastierung (6a) entsprechende Sperrrichtung und somit das Schalten unzulässiger Übersetzungsverhältnisse verhindert.

## Beschreibung

Die Erfindung betrifft eine Schalteinrichtung mit einer elektronischen Steuereinheit und Sensorik zur Erfassung von Getriebeparametern, für ein Fahrzeuggetriebe, welches einen durch den Fahrzeugführer manuell schaltbaren Teil aufweist, bei welchem über eine Schaltwelle gezielt einzelne, anwählbare Schaltschienen bewegbar und darüber zugeordnete Übersetzungsverhältnisse schaltbar sind.

Im Bereich der Kraftfahrzeugtechnik kommen als Fahrzeuggetriebe überwiegend Schaltgetriebe zum Einsatz. Bei einem derartigen Getriebe hat der Fahrzeugführer die Möglichkeit, über eine Schalteinrichtung verschiedene Übersetzungsverhältnisse zu schalten und damit die Drehzahl und das Drehmoment der Brennkraftmaschine entsprechend zu wandeln.

Bei Nutzfahrzeugen, und hier insbesondere bei großen Nutzfahrzeugen, kommen zudem neben dem Schaltgetriebe als Hauptgetriebeteil häufig ein Splitgruppengetriebe und ein Bereichsgruppengetriebe zum Einsatz. Durch das Splitgruppengetriebe wird hierbei eine Verdichtung der Übersetzungsverhältnisse erreicht, während das Bereichsgruppengetriebe den Bereich der möglichen Übersetzungsverhältnisse erweitert. Bei einer derartigen Gruppenbauweise eines Fahrzeuggetriebes werden üblicherweise Schaltungen im Splitgruppengetriebe und Bereichsgruppengetriebe pneumatisch durchgeführt, während der Hauptgetriebeteil manuell durch den Fahrzeugführer schaltbar ist, wobei hierbei die Schaltbewegung des Fahrzeugführers durch die Pneumatik unterstützt werden kann.

Des Weiteren werden im zunehmenden Maße elektronische Anordnungen zur Steuerung derartiger Getriebe vorgesehen. Diese elektronischen Steuereinheiten erfassen über eine entsprechende Sensorik bestimmte Getriebeparameter und verhindern bei Erkennen unzulässiger Parameter gezielt Schaltungen, um Beschädigungen von Getriebeteilen und umliegender Fahrzeugteile zu verhindern.

Aus der DE 100 29 497 A1 ist bereits eine elektropneumatische Schalteinrichtung für ein Fahrzeuggetriebe mit einem Hauptgetriebeteil, einem Splitgruppengetriebe und einem Bereichsgruppengetriebe bekannt, bei welcher eine Sperreinrichtung zur mechanischen Unterbindung der manuellen Schaltung des Fahrzeuggetriebes und eine Einrichtung zur Unterbindung pneumatischer Schaltungen nicht zulässiger Übersetzungsverhältnisse vorgesehen sind. Hierzu werden durch eine elektronische Steuereinheit und Sensoren Parameter, wie beispielsweise die Stellung des Kupplungspedals, die Stellung der Schaltwelle und die Abtriebsdrehzahl des Getriebes, erfasst, um unzulässige Übersetzungsverhältnisse zu erkennen und dadurch bestimmte Schaltungen im Hauptgetriebeteil, Splitgruppengetriebe sowie Bereichsgruppengetriebe gezielt zu unterbinden. Im Speziellen führt hierbei nur eine betätigte Fahrzeugkupplung zu einer Versorgung des Schaltzylinders des Splitgruppengetriebes mit Druckluft, während ein Wechsel im Bereichsgruppengetriebe nur möglich wird, wenn im Hauptgetriebeteil durch den Fahrzeugführer manuell die Neutralstellung eingelegt wird. Zudem werden Schaltungen im Hauptgetriebeteil mechanisch unterbunden, wenn hierdurch unzulässig hohe Getriebedrehzahlen hervorgerufen werden würden. Dabei wird durch einen Sperrzylinder gezielt die Wahl der Schaltgasse der unzulässigen Übersetzungsverhältnisse verhindert bzw. die Schaltwelle wird durch den Sperrzylinder in eine zulässige Schaltgasse axial verschoben.

Aus der DE 102 17 482 A1 ist des Weiteren eine elektropneumatische Schalteinrichtung bekannt, bei welcher eine pneumatische Servounterstützungseinrichtung vorgesehen ist, die bei Vorliegen eines Betätigungssignals der Kupplung den Fahrer bei manuellen Schaltungen im Hauptgetriebeteil unterstützt. Folglich wird bei einer nicht betätigten Kupplung dem Fahrzeugführer ein Schaltvorgang entsprechend erschwert.

Nachteilhaft am bekannten Stand der Technik ist, dass bei Vorliegen unzulässiger Parameter im Bereich des Hauptgetriebeteils lediglich die Wahl der Schaltgasse unterbunden wird bzw. eine bestimmte Schaltgasse vorgegeben wird, Fehlschaltungen in einer Schaltgasse aber möglich sind. Zudem wird bei einer Nichtbetätigung der Kupplung lediglich die Servounterstützung der manuellen Schaltungen durch den Fahrzeugführer abgeschaltet.

Der vorliegenden Erfindung liegt daher die Aufgabe zu Grunde, eine Schalteinrichtung zu schaffen, bei welcher auch Fehlschaltungen in einer Schaltgasse und/oder Schaltungen bei nicht betätigter Kupplung verhindert werden.

Die Aufgabe wird vorrichtungstechnisch ausgehend vom Oberbegriff der nebengeordneten Ansprüche 1 und 5 in Verbindung mit deren kennzeichnenden Merkmalen gelöst, während eine verfahrenstechnische Lösung gemäß des Oberbegriffs des Anspruchs 10 in Verbindung mit dessen kennzeichnenden Merkmalen stattfindet. Die jeweils abhängigen, untergeordneten Ansprüche geben vorteilhafte Weiterbildungen der Erfindung wieder.

Die Erfindung umfasst gemäß des ersten nebengeordneten Vorrichtungsanspruchs die technische Lehre, dass im Bereich der Schaltwelle des Schaltgetriebes mindestens ein Sperrzylinder angeordnet ist, welcher über die elektronische Steuereinheit in Abhängigkeit erfasster Getriebeparameter regelbar ist und im betätigten Zustand mit einer Sperrrastierung in Kontakt tritt. Dadurch wird eine Verdrehung der Schaltwelle in die der Sperrrastierung entsprechende Richtung und somit das Schalten unzulässiger Übersetzungsverhältnisse verhindert. Mit dem Begriff Sperrrastierung ist in diesem Fall eine höckerartige Ausbildung auf der Schaltwelle gemeint, mit welcher der Sperrzylinder in Eingriff kommen kann, um die Verdrehbewegung der Schaltwelle zum Schalten eines Ganges zu unterbinden. Der Begriff Getriebeparameter umfasst die gängigen Parameter des Getriebes, wie beispielsweise die Drehzahlen der An- und Abtriebswelle, und den Status der Kupplungsbetätigung.

Dadurch wird eine Schaltung anhand der Getriebeparameter zu diesem Zeitpunkt als unzulässig deklarierter Gänge, also unzulässiger Übersetzungsverhältnisse, wirksam verhindert und somit die Gefahr der Beschädigung von Getriebebauteilen durch Fehlschaltungen unterbunden.

Gemäß einer weiteren vorteilhaften Ausgestaltung der Erfindung ist im Bereich der Schaltwelle genau ein Sperrzylinder angeordnet, welcher im betätigten Zustand eine Drehung der Schaltwelle in beide Richtungen unterbindet. Eine derartige Vorrichtung findet Anwendung zum Unterbinden einer unzulässigen Schaltung bei nicht geöffneter Kupplung. Dies hat den Vorteil, dass auf diese Art und Weise eine Beschädigung der Getriebeteile, welche bei der Synchronisierung der noch durch den Motor angetriebenen Getriebeeingangswelle auftreten könnten, ausgeschlossen wird.

In Weiterbildung der Erfindung sind im Bereich der Schaltwelle zwei Sperrzylinder angeordnet, von denen jeder im betätigten Zustand eine Drehrichtung der Schaltwelle sperrt. Durch eine derartige Anordnung kann eine zuverlässige Verhinderung des Schaltens von Übersetzungsverhältnissen bewerkstelligt werden, welche zu diesem Zeitpunkt zu einer unzulässig hohen Drehzahl des Schaltgetriebes führen würden.

Gemäß einer weiteren vorteilhaften Ausführungsform der Erfindung sind im Bereich der Schaltwelle eine der Anzahl an möglichen Schaltstellungen entsprechenden Zahl Sperrzylinder angeordnet, von denen jeder im betätigten Zustand in die Drehrichtung der Schaltwelle zum Schalten des zugehörigen Übersetzungsverhältnisses sperrt. Durch diese Maßnahme kann eine individuelle Sperrung einzelner Übersetzungsverhältnisse erfolgen. Eine derartige Sperrung muss dementsprechend auch nicht im Folgenden an der Gassenwahl des Fahrzeugführers für das als nächstes zu schaltende Übersetzungsverhältnis orientiert werden.

Alternativ umfasst die Erfindung gemäß eines weiteren nebengeordneten Anspruchs die technische Lehre, dass im Bereich der Schaltschienen pro Schaltschiene mindestens ein Sperrzylinder angeordnet ist, welcher über die elektronische Steuereinheit in Abhängigkeit der erfassten Getriebeparameter regelbar ist und im betätigten Zustand mit einer Sperrrastierung in Kontakt tritt. Dieser Kontakt zwischen Sperrzylinder und Sperrrastierung verhindert eine Verschiebung der jeweiligen Schaltschiene in die der Sperrrastierung entsprechenden Richtung und somit das Schalten eines unzulässigen Übersetzungsverhältnisses. In diesem Fall bedeutet der Begriff Sperrrastierung einen Absatz auf der jeweiligen Schaltschiene, in welche der betätigte Sperrzylinder eingreifen kann, so dass eine Verschiebung der Schaltschiene in Sperrrichtung unmöglich wird.

Durch diese Maßnahme werden Fehlschaltungen durch Anordnungen im Bereich der Schaltschienen wirksam verhindert.

In Weiterbildung der Erfindung sind im Bereich jeder Schaltschiene zwei Sperrzylinder angeordnet, welche im betätigten Zustand eine Verschiebung in Richtung des zugeordneten Übersetzungsverhältnisses unterbinden. Vorteilhaft bei einer derartigen Anordnung ist, dass jedes schaltbare Übersetzungsverhältnis individuell gesperrt werden kann.

Gemäß einer weiteren vorteilhaften Ausgestaltung der Erfindung ist die elektronische Steuerungseinrichtung der Schalteinrichtung im Bereich des mindestens einen Sperrzylinders als mechatronisches System angeordnet. Dadurch ist eine sehr kompakte Gestaltung der erfindungsgemäßen Schalteinrichtung möglich.

In Weiterbildung der Erfindung ist die durch den mindestens einen Sperrzylinder erzeugte Sperre durch den Fahrzeugführer überdrückbar. Dies hat den Vorteil, dass der Fahrzeugführer in Extremsituationen nach seinem eigenen Ermessen das Übersetzungsverhältnis wählen kann.

Gemäß einer weiteren vorteilhaften Weiterbildung der Erfindung ist der mindestens eine Sperrzylinder pneumatisch oder hydraulisch ansteuerbar. Durch diese Maßnahme ist eine präzise Ansteuerung des mindestens einen Sperrzylinders mit der nötigen Kraftaufbringung zur Sperrung möglich.

In Weiterbildung der Erfindung wird ein Herausschalten aus einem Übersetzungsverhältnis nicht unterbunden. Dadurch wird eine Schaltung in neutral immer möglich, was dem Fahrzeugführer die Möglichkeit gibt, einen Wechsel des Bereichs im Bereichsgruppengetriebe vorzunehmen.

Weitere, die Erfindung verbessernde Maßnahmen werden nachstehend gemeinsam mit der Beschreibung bevorzugter Ausführungsbeispiele der Erfindung anhand der Figuren näher dargestellt.
Es zeigt:
Fig.1 eine schematische Ansicht der erfindungsgemäßen Schalteinrichtung gemäß einer ersten Ausführungsform;
Fig.2 eine schematische Ansicht der erfindungsgemäßen Schalteinrichtung gemäß einer zweiten Ausführungsform und
Fig.3 eine schematische Ansicht der erfindungsgemäßen Schalteinrichtung gemäß einer dritten Ausführungsform.

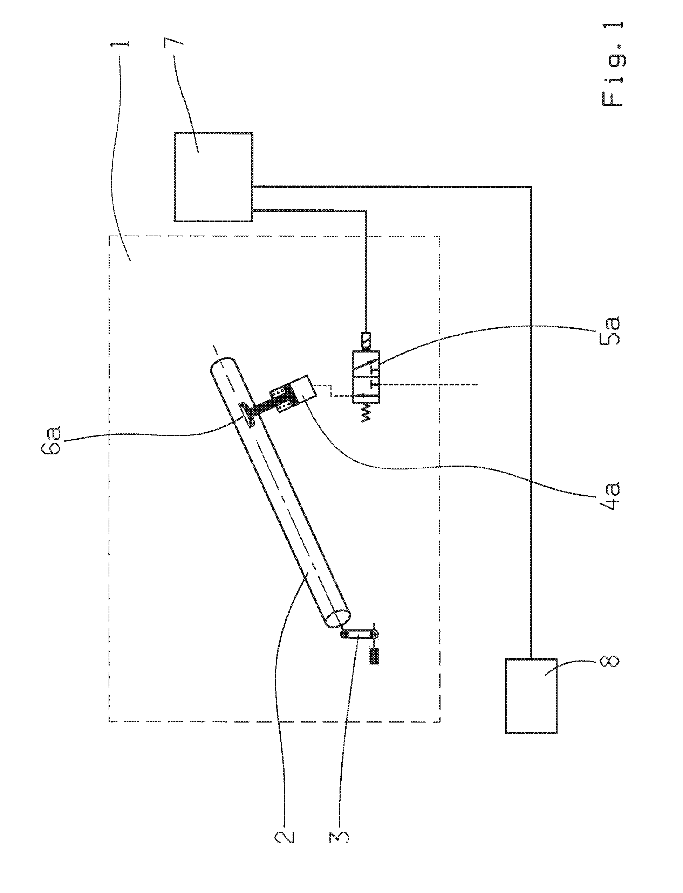

In Fig.1 ist eine schematische Ansicht der erfindungsgemäßen Schalteinrichtung gemäß einer ersten Ausführungsform zu sehen, welche Teil eines Schaltgetriebes 1 ist und über eine Schaltwelle 2 verfügt. Diese Schaltwelle 2 steht auf ihrer einen Seite mit einem Schaltgestänge 3 in Kontakt, während sie auf ihrer entgegengesetzten Seite über einen hier nicht dargestellten Schaltfinger eine bestimmte Anzahl an Schaltschienen, welche in dieser Ansicht ebenfalls nicht zu sehen sind, bewegen kann. Die manuelle Einstellung des gewünschten Übersetzungsverhältnisses wird durch den Fahrzeugführer mittels des Schaltgestänges 3 vorgenommen, wobei über das Schaltgestänge 3 eine axiale Verschiebung der Schaltwelle 2 zur Wahl einer Schaltgasse und eine Verdrehung der Schaltwelle 2 zur Wahl eines bestimmten Übersetzungsverhältnisses, also Ganges, einleitbar ist. Im Bereich der Schaltwelle 3 ist zudem ein Sperrzylinder 4a angeordnet, welcher über ein 3/2-Wegeventil 5a mit einem Druckmittel beaufschlagt werden kann. Im druckbeaufschlagten Zustand tritt der Sperrzylinder 4a mit einer auf der Schaltwelle 2 platzierten Sperrrastierung 6a in Kontakt. In der in Fig.1 gezeigten Ausführung der Sperrrastierung 6a weist diese zwei Sperrhöcker auf, welche bei einem Kontakt mit Sperrzylinder 4a eine Verdrehung der Schaltwelle 2 in beide Richtungen unterbindet. Zur Steuerung dieser Sperrung ist das Ventil 5a mit einer elektronischen Steuereinheit 7 verbunden, welche durch eine entsprechende Ansteuerung des Ventils 5a eine Druckbeaufschlagung des Sperrzylinders 4a hervorruft. Des Weiteren ist die Steuereinheit 7 mit dem Sensor 8 verbunden, welcher den Verstellweg des Kupplungspedals erfasst.

Bei einem Versuch des Fahrzeugführers, aus einer Neutralstellung des Schaltgetriebes 1 in einen Gang bei nicht betätigter Kupplung zu schalten, wird die Nichtbetätigung durch die Steuereinheit 7 über den Sensor 8 erkannt und daraufhin das Ventil 5a mit Strom beaufschlagt. Dies führt dazu, dass der Sperrzylinder 4a mit der Sperrrastierung 6a auf der Schaltwelle 2 in Kontakt tritt und somit deren Verdrehung unmöglich wird. Erst durch eine Betätigung des Kupplungspedals wird der Stromfluss zum Ventil 5a unterbrochen, was dazu führt, dass der Sperrzylinder 4a die Sperrrastierung 6a verlässt und somit der jeweilige Gang wieder schaltbar ist.

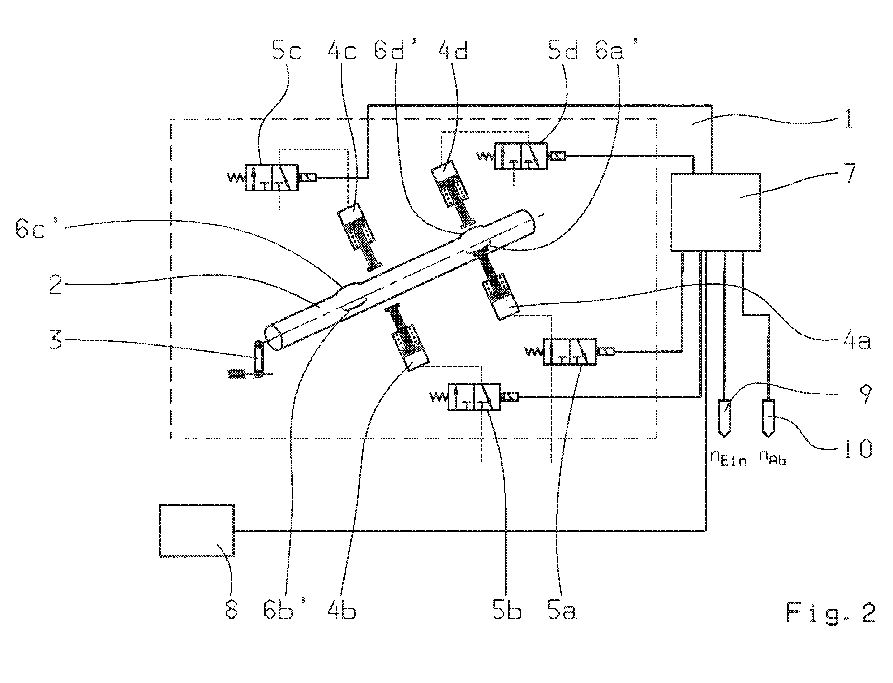

Im Unterschied dazu weist die erfindungsgemäße Schalteinrichtung in Fig.2 vier Sperrzylinder 4a-4d auf. Diese sind jeweils über eine eigenes 3/2-Wegeventil 5a-5d mit Druck beaufschlagbar und treten im Fall der Druckbeaufschlagung jeweils mit einer eigenen Sperrrastierung 6a'-6d' auf der Schaltwelle 2 in Kontakt. Allerdings sind diese Sperrrastierungen 6a'-6d' in diesem Fall so ausgebildet, dass eine Verdrehung der Schaltwelle 2 nur in Richtung des jeweiligen Übersetzungsverhältnisses, und somit Ganges, unterbunden wird. Ferner sind die Sperrrastierungen 6a'-6d' derart entlang der Schaltwelle 2 angeordnet, dass sie nur bei der Wahl der Schaltgasse ihres zugeordneten Übersetzungsverhältnisses, also einer entsprechenden axialen Verschiebung der Schaltwelle 2, zum Tragen kommen. Des Weiteren steht die Steuereinheit 7 neben dem Kupplungssensor 8 mit den Sensoren 9 und 10 in Kontakt, welche die Getriebeeingangs- und -ausgangsdrehzahl erfassen. Über eine Kalkulation der Drehzahlunterschiede zwischen Ein- und Ausgangswelle des Schaltgetriebes 1 kann erkannt werden, in welche Gänge ein Schaltvorgang nicht zulässig ist. Im Falle, dass eine Schaltung in ein Übersetzungsverhältnis aufgrund der bestehenden Drehzahldifferenz nicht zulässig ist, wird durch die Steuereinheit 7 das entsprechende Ventil 5a-5d des anzusteuernden Sperrzylinders 4a-4c bestromt und durch den Kontakt Sperrzylinder 4a-4d mit der Sperrrastierung 6a'-6d' eine entsprechende Verdrehung der Schaltwelle 2 verhindert.

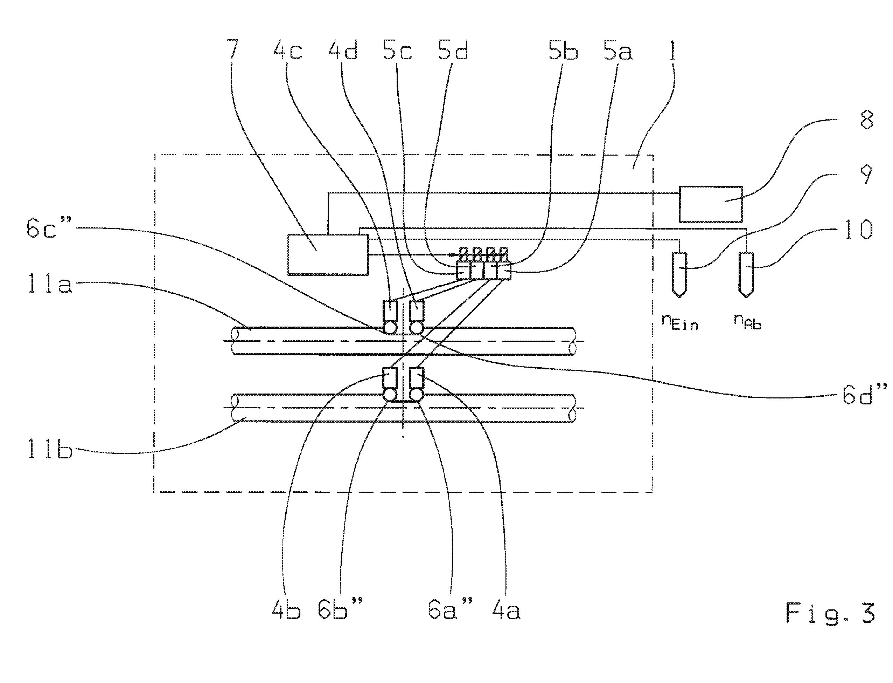

In Fig.3 ist eine weitere Ausführungsform der erfindungsgemäßen Schalteinrichtung zu sehen. In diesem Fall sind die Sperrzylinder 4a-4d im Bereich der Schaltschienen 11a und 11 b des Schaltgetriebes 1 angeordnet. Auch in diesem Fall steht die Steuereinheit 7 mit dem Kupplungssensor 8 sowie den Sensoren 9 und 10 in Verbindung, um unzulässige Schaltungen von Übersetzungsverhältnissen zu detektieren. Wird durch die Steuereinheit 7 aufgrund der erfassten Parameter die Schaltung eines Ganges, also Übersetzungsverhältnisses, als nicht zulässig eingestuft, so wird das Ventil 5a-5d des betreffenden Sperrzylinders 4a-4d mit Strom beaufschlagt, was dazu führt, dass der Sperrzylinder 4a-4d mit einer Sperrrastierung 6a"-6d" auf den Schaltschienen 11a und 11b in Kontakt tritt. Hierdurch wird eine Verschiebung der betreffenden Schaltschiene 11a oder 11 b in Richtung des zu schaltenden Ganges wirksam unterbunden.

### Bezugszeichen

- 1: Schaltgetriebe
- 2: Schaltwelle
- 3: Schaltgestänge
- 4a-4d: Sperrzylinder
- 5a-5d: Ventil
- 6a,6a'-6d',6a"-6d": Sperrrastierung
- 7: Steuereinheit
- 8: Sensor
- 9: Sensor
- 10: Sensor
- 11 a,11 b: Schaltschiene

## Patentansprüche

1. Schalteinrichtung mit einer elektronischen Steuereinheit (7) und Sensorik (8, 9 ,10) zur Erfassung von Getriebeparametern, für ein Fahrzeuggetriebe, welches einen durch den Fahrzeugführer manuell schaltbaren Teil (1) aufweist, bei welchem über eine Schaltwelle (2) gezielt einzelne, anwählbare Schaltschienen (11a, 11b) bewegbar und darüber zugeordnete Übersetzungsverhältnisse schaltbar sind, **dadurch gekennzeichnet, dass** im Bereich der Schaltwelle (2) mindestens ein Sperrzylinder (4a-4d) angeordnet ist, welcher über die elektronische Steuereinheit (7) in Abhängigkeit der erfassten Getriebeparameter regelbar ist und im betätigten Zustand mit einer Sperr-Rastierung (6a; 6a'-6d') in Kontakt tritt, was eine Verdrehung der Schaltwelle (2) in die der Sperr-Rastierung (6a; 6a'-6d') entsprechende Sperrrichtung und somit das Schalten unzulässiger Übersetzungsverhältnisse verhindert.

2. Schalteinrichtung nach Anspruch 1, **dadurch gekennzeichnet, dass** im Bereich der Schaltwelle (2) genau ein Sperrzylinder (4a) angeordnet ist, welcher im betätigten Zustand eine Drehung der Schaltwelle (2) in beide Richtungen unterbindet.

3. Schalteinrichtung nach Anspruch 1, **dadurch gekennzeichnet, dass** im Bereich der Schaltwelle (2) zwei Sperrzylinder (4a, 4c; 4b, 4d) angeordnet sind, von denen jeder im betätigten Zustand eine Drehrichtung der Schaltwelle (2) sperrt.

4. Schalteinrichtung nach Anspruch 1**, dadurch gekennzeichnet, dass** eine der Anzahl an möglichen Schaltstellungen entsprechende Zahl Sperrzylinder (4a-4d) im Bereich der Schaltwelle (2) angeordnet sind, von denen jeder im betätigten Zustand in die Drehrichtung der Schaltwelle (2) zum Schalten des zugehörigen Übersetzungsverhältnisses sperrt.

5. Schalteinrichtung mit einer elektronischen Steuereinheit (7) und Sensorik (8, 9, 10) zur Erfassung von Fahrzeugparametern, für ein Fahrzeuggetriebe, welches einen durch den Fahrzeugführer manuell schaltbaren Teil (1) aufweist, bei welchem über eine Schaltwelle (2) gezielt einzelne, anwählbare Schaltschienen (11a, 11b) bewegbar und darüber zugeordnete Übersetzungsverhältnisse schaltbar sind, **dadurch gekennzeichnet, dass** im Bereich der Schaltschienen (11a, 11b) pro Schaltschiene (11a, 11b) mindestens ein Sperrzylinder (4a, 4c; 4b, 4d) angeordnet ist, welcher über die elektronische Steuereinheit (7) in Abhängigkeit der erfassten Getriebeparameter regelbar ist und im betätigten Zustand mit einer Sperr-Rastierung (6a", 6c"; 6b", 6d") in Kontakt tritt, was eine Verschiebung der jeweiligen Schaltschiene (11a, 11b) in die der Sperr-Rastierung (6a", 6c"; 6b", 6d") entsprechende Sperrrichtung und somit das Schalten unzulässiger Übersetzungsverhältnisse verhindert.

6. Schalteinrichtung nach Anspruch 5, **dadurch gekennzeichnet, dass** im Bereich jeder Schaltschiene (11a, 11 b) zwei Sperrzylinder (6a"-6d") angeordnet sind, welche im betätigten Zustand eine Verschiebung in Richtung des zugeordneten Übersetzungsverhältnisses unterbinden.

7. Schalteinrichtung nach einem der vorhergehenden Ansprüche, **dadurch gekennzeichnet, dass** deren elektronische Steuereinheit (7) im Bereich des mindestens einen Sperrzylinders (4a-4d) als mechatronisches System angeordnet ist.

8. Schalteinrichtung nach einem der vorhergehenden Ansprüche, **dadurch gekennzeichnet, dass** die durch den mindestens einen Sperrzylinder (4a-4d) erzeugte Sperre durch den Fahrzeugführer überdrückbar ist.

9. Schalteinrichtung nach einem der vorhergehenden Ansprüche, **dadurch gekennzeichnet, dass** der mindestens eine Sperrzylinder (4a-4d) pneumatisch oder hydraulisch ansteuerbar ist.

10. Verfahren zum Steuern einer Schalteinrichtung, welche entsprechend einem der Ansprüche 1 bis 9 ausgebildet ist, **dadurch gekennzeichnet, dass** der mindestens eine Sperrzylinder (4a-4d) beim Feststellen eines unzulässigen Getriebeparameters betätigt wird.

11. Verfahren nach Anspruch 10, **dadurch gekennzeichnet, dass** eine Betätigung beim Erkennen einer nicht geöffneten Kupplung als unzulässiger Getriebeparameter ausgelöst wird.

12. Verfahren nach Anspruch 10 oder 11, **dadurch gekennzeichnet, dass** eine Betätigung vor dem Schalten eines Übersetzungsverhältnisses ausgelöst wird, welches zu diesem Zeitpunkt zu einer unzulässig hohen Drehzahl des Schaltgetriebes als unzulässiger Getriebeparameter führen würde.

13. Verfahren nach einem der Ansprüche 10 bis 12, **dadurch gekennzeichnet, dass** ein Herausschalten aus einem Übersetzungsverhältnis nicht unterbunden wird.

14. Schaltgetriebe für ein Kraftfahrzeug, umfassend eine Schalteinrichtung nach einem der Ansprüche 1 bis 9.
